# EUROPEAN PATENT SPECIFICATION

(11) **EP 0 666 306 B1**
(45) Date of publication and mention of the grant of the patent: **08.12.1999**
(21) Application number: 94870022.4
(22) Date of filing: 03.02.1994
(51) Int. Cl.: C11D 3/20, C11D 1/62, C23G 1/02, C23G 1/08, C02F 5/10, C02F 5/12

(54) **Acidic cleaning compositions**
Saure Reinigungszusammensetzungen
Compositions de nettoyage acides

(43) Date of publication of application: 09.08.1995
(73) Proprietor: THE PROCTER & GAMBLE COMPANY, Cincinnati, Ohio 45202 (US)
(72) Inventor: Carrié, Michel Jean, B-1780 Wemmel (BE)
(74) Representative: Engisch, Gautier

(56) References cited:
- EP-A- 0 411 708
- EP-A- 0 496 188
- WO-A-93/14181

## Description

### Technical field

The present invention relates to cleaning compositions for hard-surfaces. More specifically, compositions are described which give optimal performance in removing limescale stains and encrustations while ensuring appropriate shine to the surface being treated.

### Background

Tap water contains a certain amount of solubilized ions which upon water evaporation eventually deposit as salts such as calcium carbonate on surfaces which are often in contact with said water, resulting in an unaesthetic aspect of said surfaces. This limescale formation and deposition phenomenon is even more acute in places where water is particularly hard.

Typically, these limescale deposits are removed by using a cleaning composition comprising an acid or a mixture thereof which "dissolves" limescale such as maleic acid. However, it has been found that maleic acid per se is detrimental to shine. Indeed, a composition containing maleic acid only when used to descale a surface leaves residues on it, which appear as streaks when water has evaporated. This problem is even more acute under "no-rinse" usage conditions. However, "shine" quality, i.e. the absence of filming or streaking on surfaces is equally important to the user of such a limescale removing composition.

It is known in the art that the use of surfactants and/or solvents contributes to address the shine negative of maleic acid. However, there is a constant strive for the development of limescale removing compositions with better performance in several respects including the shine performance. This is even more important in applications where it is desirable to maintain the amount of surfactants to a minimum. This is the case for limescale removing compositions designed for descaling appliances or simply for facilitating the rinse operation of a limescale removing composition from the surfaces treated.

It is therefore an object of the present invention to provide a composition for the removal of limescale, said composition possessing a superior shine quality while being also particularly efficient in removing limescale.

It has now been found that the addition of citric acid, succinic acid or mixtures thereof in a composition comprising maleic acid and a surfactant or mixtures thereof, improves shine to the surface without compromising on the limescale removing capacity. Indeed, it has been found that the compositions of the present invention comprising maleic acid and such a second acid, i.e. citric acid, succinic acid or mixtures thereof provide significantly better shine performance than the same compositions without such a second acid, while being also particularly efficient in removing limescale.

A further advantage of the present invention is that compositions according to the present invention comprising surfactants, at a level below 1% by weight of the total compositions are particularly effective on limescale deposits containing a high proportion of calcium carbonate such as those found on all types of surfaces including metal or synthetic surfaces, when the water is very hard or in scaled appliances such as kettles, coffee machines, steam irons.

US-3 277 008 discloses solid compositions suitable for use with water to form aqueous solutions for descaling the internal metal surfaces of the jacket of the glass-lined jacketed equipment. Said compositions comprise a cleaning agent such as sulfamic, citric or hydrochloric acid, maleic acid and a corrosion inhibitor. Surfactants are not disclosed.

DE-3 822 658 discloses compositions useful for removing oxide layers from metal surfaces like copper or bronze. Said compositions comprise a mineral acid for example nitric acid, carboxylic acids such as maleic acid, citric acid, or mixtures thereof, phosphonic acid and thioureas. Nonionic surfactants are disclosed as optional ingredients without specifying appropriate amounts. No further surfactants are disclosed.

EP 496 188 relates to an aqueous cleaning composition comprising maleic acid, nonionic surfactant and has a pH of from 1.0 to 4.0.

Furthermore the benefits derivable from the use of citric acid, succinic acid or mixtures thereof in limescale removing compositions in term of low residuality and improved shine to the surfaces treated have never been acknowledged.

### Summary of the invention

The present invention is an aqueous composition having a pH of from 0.1 to 4.5, suitable for removing limescale from hard-surfaces, comprising from 0.1 to 45% by weight of maleic acid, from 10 to 95% by weight of water, and from 0.01% to 30% by weight of the total composition of a surfactant selected from the group of nonionic, anionic, amphoteric, zwitterionic, cationic surfactants or mixtures thereof. Said composition further comprises from 0.1 to 40% by weight of a second acid selected from the group of citric acid, succinic acid or mixtures thereof and if the second acid is citric acid then the surfactant is not a nonionic surfactant or mixtures thereof. However, if the second acid is citric acid then the surfactant is not a nonionic surfactant or mixtures thereof.

The present invention also encompasses the use of such a limescale removing composition, whereby the shine to the surface is improved.

The present invention also encompasses a process of treating hard-surfaces wherein a composition according to the present invention is used in its neat or diluted form.

### Detailed description of the invention

The compositions according to the present invention are designed for removing limescale or soils comprising limescale as a main component. Thus they comprise as a first essential ingredient maleic acid. The compositions according to the present invention comprise from 0.1% to 45% by weight of the total composition of maleic acid, preferably from 1% to 25% and more preferably from 8% to 20%. This percentage is calculated on the basis of the molecular weight of the acid form, but maleic anhydride is equally convenient for use in the compositions according to the present invention. Indeed maleic anhydride is generally cheaper and it is transformed into the acid form when incorporated in an aqueous medium. Other acids which are particularly efficient in limescale removal may be used in addition to maleic acid, such as for example sulfonic acids, hydrochloric acid, nitric acid, phosphoric acid or mixtures thereof. It is preferred herein to use maleic acid either alone or together with sulfonic acids such as sulfamic acid or methanesulfonic acid.

The compositions according to the present invention exhibit good shine quality. Thus they comprise as a second essential ingredient a second acid selected from the group of citric acid, succinic acid or mixtures thereof. The compositions of the present invention comprise from 0.1% to 40% by weight of the total composition of such an acid, preferably from 1.0% to 25% and more preferably from 3% to 10%.

The compositions according to the present invention comprise as a further essential ingredient a surfactant selected from the group of anionic, nonionic, cationic, amphoteric, zwitterionic or mixtures thereof. It is possible to use mixtures of a type of surfactant or of different types of such surfactants. The compositions according to the present invention comprise from 0.01% to 30% by weight of the total composition of said surfactant, preferably from 0.05% to 20%, more preferably from 0.1% to 10%.

It is preferred to use cationic surfactants in the compositions of the present invention. Indeed, it has been found that they exhibit good shine quality while contributing also to the limescale removing performance. Furthermore, said cationic surfactants are also stable in acidic medium and possess disinfecting properties. Suitable cationic surfactants to be used herein include derivatives of quaternary ammonium, phosphonium, imidazolium and sulfonium compounds. Preferred cationic surfactants for use herein are according to the formula R₁R₂R₃R₄N⁺ X⁻, wherein X is a counteranion, R₁ is a C₈-C₂₀ hydrocarbon chain and R₂, R₃ and R₄ are independently selected from H or C₁-C₄ hydrocarbon chains. In a preferred embodiment of the present invention, R₁ is a C₁₀-C₁₈ hydrocarbon chain, most preferably C_{14,} C₁₆ or C₁₈, and R₂, R₃ and R₄ are all three methyl, and X is halogen, preferably bromide or chloride, most preferably bromide. Examples of cationic surfactants are stearyl trimethyl ammonium bromide (STAB), cetyl trimethyl ammonium bromide (CTAB) and tetradecyl trimethyl ammonium bromide (TDTAB).

Suitable zwitterionic surfactants contain both cationic and anionic hydrophilic groups on the same molecule at a relatively wide range of pH's. The typical cationic group is a quaternary ammonium group, although other positively charged groups like phosphonium, imidazolium and sulfonium groups can be used. The typical anionic hydrophilic groups are carboxylates and sulfonates, although other groups like sulfates, phosphonates, and the like can be used. A generic formula for some preferred zwitterionic surfactants is

R₁-N⁺(R₂)(R₃)R₄X⁻

wherein R₁ is a hydrophobic group; R₂ and R₃ are each C₁-C₄ alkyl, hydroxy alkyl or other substituted alkyl group which can also be joined to form ring structures with the N; R₄ is a moiety joining the cationic nitrogen atom to the hydrophilic group and is typically an alkylene, hydroxy alkylene, or polyalkoxy group containing from 1 to 4 carbon atoms; and X is the hydrophilic group which is preferably a carboxylate or sulfonate group. Preferred hydrophobic groups R₁ are alkyl groups containing from 8 to 22, preferably less than 18, more preferably less than 16 carbon atoms. The hydrophobic group can contain unsaturation and/or substituents and/or linking groups such as aryl groups, amido groups, ester groups and the like. In general, the simple alkyl groups are preferred for cost and stability reasons.

Other specific zwitterionic surfactants have the generic formulas:

R₁-C(O)-N(R₂)-(C(R₃)₂)ₙ-N(R₂)₂⁽⁺⁾-(C(R₃)₂)ₙ-SO₃)⁽⁻⁾

or

R₁-C(O)-N(R₂)-(C(R₃)₂)ₙ-N(R₂)₂⁽⁺⁾-(C(R₃)₂)ₙ-COO⁽⁻⁾

wherein each R₁ is a hydrocarbon, e.g. an alkyl group containing from 8 up to 20, preferably up to 18, more preferably up to 16 carbon atoms, each R₂ is either a hydrogen (when attached to the amido nitrogen), short chain alkyl or substituted alkyl containing from one to 4 carbon atoms, preferably groups selected from the group consisting of methyl, ethyl, propyl, hydroxy substituted ethyl or propyl and mixtures thereof, preferably methyl, each R₃ is selected from the group consisting of hydrogen and hydroxy groups and each n is a number from 1 to 4, preferably from 2 to 3, more preferably 3, with no more than one hydroxy group in any (C(R₃)₂) moiety. The R₁ groups can be branched and/or unsaturated. The R₂ groups can also be connected to form ring structures. A surfactant of this type is a C₁₀-C₁₄ fatty acylamidopropylene(hydroxypropylene)sulfobetaine that is available from the Sherex Company under the trade name "Varion CAS sulfobetaine"®.

Suitable amphoteric surfactants are surfactants which are similar to the zwitterionic surfactants but without the quaternary group. However, they contain an amine group that is protonated at the low pH of the composition to form cationic group and they may also possess an anionic group at these pHs.

Suitable anionic surfactants for use herein are according to the formula R₁SO₃M wherein R₁ represents a hydrocarbon group selected from the group consisting of straight or branched alkyl radicals containing from 6 to 24 carbon atoms and alkyl phenyl radicals containing from 6 to 15 carbon atoms in the alkyl group. M is a salt forming cation which typically is selected from the group consisting of sodium, potassium, ammonium, and mixtures thereof.

Other suitable anionic surfactants can be represented by the water-soluble salts of an alkyl sulfate or an alkyl polyethoxylate ether sulfate wherein the alkyl group contains from 6 to 24 carbon atoms, and preferably from 1 to 30 ethoxy groups for the alkyl polyethoxylate ether sulfates or an alkyl benzene sulfonate in which the alkyl group contains from 9 to 15 carbon atoms, in straight chain or branched chain configuration. An example of alkyl benzene sulfonates is the sodium salt of linear C₁₀-C₁₄ alkyl benzene sulfonate.

Suitable nonionic surfactants to be used herein are alkoxylated alcohol nonionic surfactants which can be readily made by condensation processes which are well known in the art. However, a great variety of such alkoxylated alcohols, especially ethoxylated and/or propoxylated alcohols is also conveniently commercially available. Surfactants catalogs are available which list a number of surfactants, including nonionics.

Accordingly, preferred alkoxylated alcohols for use herein are nonionic surfactants according to the formula RO(E)e(P)pH where R is a hydrocarbon chain of from 2 to 24 carbon atoms, E is ethylene oxide and P is propylene oxide, and e and p which represent the average degree of, respectively ethoxylation and propoxylation, are of from 0 to 24. The hydrophobic moiety of the nonionic compound can be a primary or secondary, straight or branched alcohol having from 8 to 24 carbon atoms. Preferred nonionic surfactants for use in the compositions according to the invention are the condensation products of ethylene oxide with alcohols having a straight alkyl chain, having from 6 to 22 carbon atoms, wherein the degree of ethoxylation is from 1 to 15, preferably from 5 to 12. Such suitable nonionic surfactants are commercially available from Shell, for instance, under the trade name Dobanol^{R} or from Shell under the trade name Lutensol^{R}. These nonionics are preferred because they have been found to allow the formulation of a stable product without requiring the addition of stabilizers or hydrotopes.

The composition according to the present invention is free of nonionic surfactants when the second acid is citric acid.

It has been observed that the shine to the surface being treated is improved with the compositions of the present invention comprising surfactants, maleic acid and a second acid selected from the group of citric acid, succinic acid or mixtures thereof. By the expression "shine to the surface is improved" it is to be understood that the residuality of the compositions of the present invention for hard surfaces is reduced. In other words, the propensity of a composition to leave visible residues on a given surface is reduced.

Actually, the present invention is based on the finding that, the residuality of the compositions of the present invention is reduced compared to the residuality of the same compositions without a second acid selected from the group of citric acid, succinic acid or mixtures thereof, when using them for treating hard surfaces. This residuality reduction phenomenon, i.e. the reduction of the visibility of residues, but not necessarily the amount of residues is clearly noticeable by eye, and it can be quantified by using a hazemeter as described hereinafter in the examples. The hazemeter is known in the art under Apparatus XL-ZII Hazeguard™ from BTK Gardner GmbH.

The residuality reduction, i.e. the shine improvement to the surface treated is dependent on the relative amounts of a second acid selected from the group of citric acid, succinic acid or mixtures thereof and maleic acid present in the composition. Thus, for a given amount of maleic acid, more or less of an acid selected from the group of citric acid, succinic acid or mixtures thereof, can be added depending on the degree of residuality desired. In a preferred embodiment of the present invention the weight ratio of maleic acid to said acid, such that the shine to the surface is improved while excellent limescale removing performance is provided, is from 1/10 to 10/1, preferably from 1/2 to 8/1, most preferably from 1/1 to 6/1.

The compositions according to the present invention have a pH of from 0.1 to 4.5, preferably of from 0.1 to 3 and more preferably of from 0.5 to 2.

The compositions according to the present invention are aqueous. Accordingly, the compositions according to the present invention comprise from 10% to 95% by weight of the total composition of water, preferably from 50% to 90%, most preferably from 70% to 85%.

The compositions according to the present invention may further comprise a variety of other ingredients including perfumes, colorants, bactericide, thickeners, dyes, chelants, pigments, solvents, stabilizers, corrosion inhibitors, bleaches and the like.

Compositions according to the present invention are particularly suitable for treating various types of surfaces including metal surfaces such as aluminium, chromed steel or stainless steel or even synthetic surfaces, where a good shine quality is requested while being also safe for said surfaces.

Compositions according to the present invention are particularly effective on limescale deposits containing a high proportion of calcium carbonate such as those found on all types of surfaces including metal or synthetic surfaces, when the water is very hard or in scaled appliances such as kettles, coffee machines, steam irons. The preferred compositions for the above mentioned applications are the compositions containing low levels of surfactants, preferably from 0.01% to 1% by weight of the total composition, more preferably from 0.01% to 0.9% and most preferably from 0.05% to 0.8%.

The present invention further encompasses a process of treating hard-surfaces, wherein a composition as hereinbefore defined is dispensed in its neat form from a container onto said surfaces, then left to act onto said surfaces and then removed by rinsing. Said process can be used both for treating any type of hard-surface or appliance.

The present invention further encompasses a process of treating hard-surfaces, wherein a composition as hereinbefore defined is used in diluted form. The expression "used in diluted form" herein includes dilution by the user of the compositions of the present invention into water. Typical dilution levels are of from 0.5% to 50% of the compositions. Said process can be used for descaling appliances.

The compositions herein are also particularly suitable to be used not only in cold conditions but also in hot conditions. For example, when descaling a coffee machine the compositions of the present invention can be used in neat form or diluted and in hot conditions (80°C to 180°C).

As used in the foregoing paragraphs, the expression "treating" may include washing as the compositions according to the present invention comprise surfactants and removing limescale while improving the shine performance due to the appropriate combination of acids of the present invention.

The present invention is further illustrated by the following experimental data and examples.

### Experimental data

1)
   Compositions according to the present invention were evaluated in terms of their shine performance, i.e. residuality, with a hazemeter (Apparatus XL-ZII Hazeguard™ from BTK Gardner GmbH) which measures light transmission through a plate.

For this purpose the compositions to be tested were diluted in city water so as to obtain solutions of 2.5% of said compositions. Clean glass plates are dipped into the solutions and without rinsing are left to dry in the air on a plate holder. Once dried (after 1 hour), the residue on each plate is measured using a hazemeter. Nine data points are gathered for each plate and then averaged to give an average grade. For a same solution, two plates are evaluated, the data in the following table being the average of the two. The lower the grade is, the less visible residues are on the plate and the more the shine to the surface is improved.

Examples of compositions according to the present invention which have been tested according to the foregoing, are the following. These compositions are made comprising the listed ingredients in the listed proportions (weight %).

| Ingredients: (% by weight) | Compositions | | | | | | | |
|---|---|---|---|---|---|---|---|---|
| | 1* | 2* | 3 | 4 | 5 | 6* | 7 | 8 |
| Maleic acid | 14 | 14 | 14 | 12 | 12 | 14 | 14 | 14 |
| Citric acid | / | / | 5 | 7 | 4.3 | / | 5 | / |
| Succinic acid | / | / | / | / | / | / | / | 5 |
| Lutensol AO7** | 0.5 | / | / | / | / | / | / | 0.5 |
| STAB*** | / | 0.3 | 0.3 | 0.3 | 0.3 | / | / | / |
| HLAS**** | / | / | / | / | / | 3 | 3 | / |
| Waters & Minors | -----------------up to 100 ----------- | | | | | | | |
| Shine grade | 11.0 | 6.3 | 3.5 | 2.4 | 3.0 | 3.0 | 0.9 | 6.2 |

| | | | | | | | | |
|---|---|---|---|---|---|---|---|---|
| * comparative composition | | | | | | | | |
| ** Lutensol AO7 is a nonionic surfactant. | | | | | | | | |
| *** STAB is stearyl trimethyl ammonium bromide (a cationic surfactant). | | | | | | | | |
| **** HLAS, linear C₁₀-C₁₄ alkyl benzene sulfonate is an anionic surfactant. | | | | | | | | |

The shine test method shows that the use of a cationic surfactant such as for instance STAB is better in terms of shine performance compared to the use of a nonionic surfactant in a composition comprising maleic acid, see composition 2 versus composition 1.

Furthermore, the data show that the addition of citric acid to a composition comprising maleic acid and a given surfactant improves the shine to the surface treated, see composition 3 versus composition 2, composition 7 versus composition 6.

The data also show that the addition of succinic acid to a composition comprising maleic acid and a nonionic surfactant improves the shine to the surface treated, see composition 8 versus composition 1.

### Examples

Further examples of compositions according to the present invention are the following. These compositions are made comprising the listed ingredients in the listed proportions (weight %).

| Ingredients: (% by weight) | Compositions | | |
|---|---|---|---|
| | 1 | 2 | 3 |
| Maleic acid | 16 | 14 | 16 |
| Citric acid | 3 | 3 | 3 |
| Sulfamic acid | / | 2 | / |
| Myristil trimethyl | | | |
| ammonium bromide∗ | 0.1 | 0.2 | 0.2 |
| Waters & Minors | -----up to 100 ----- | | |

The above compositions possess a superior shine quality while being also particularly efficient in removing limescale. Said compositions are particularly suitable to descale appliances.

## Claims

1. An aqueous composition having a pH of from 0.1 to 4.5, suitable for removing limescale deposits on hard-surfaces, comprising from 0.1% to 45% maleic acid, from 0.01% to 30% by weight of the total composition of a surfactant selected from the group of anionic, nonionic, amphoteric, zwitterionic, cationic surfactants or mixtures thereof and from 10% to 95% water characterized in that said composition further comprises from 0.1% to 40% of a second acid selected from the group of citric acid, succinic acid or mixtures thereof and if the second acid is citric acid then the surfactant is not a nonionic surfactant or mixtures thereof.

2. A composition according to claim 1 comprising from 0.1% to 45% by weight of the total composition of maleic acid, preferably from 1% to 25% and more preferably from 8% to 20%.

3. A composition according to any of the preceding claims comprising from 0.1% to 40% by weight of the total composition of said second acid, preferably from 1% to 25% and more preferably from 3% to 10%.

4. A composition according to any of the preceding claims wherein said second acid is citric acid.

5. A composition according to any of the preceding claim wherein the weight ratio of maleic acid to said second acid is of from 1/10 to 10/1, preferably of from 1/2 to 8/1, most preferably of from 1/1 to 6/1.

6. A composition according to any of the preceding claims wherein the surfactant is a cationic surfactant having the formula R₁R₂R₃R₄N⁺ X⁻, wherein X is a counteranion, R₁ is a C₈-C₂₀ hydrocarbon chain and R₂, R₃ and R₄ are independently selected from H or C₁-C₄ hydrocarbon chains or mixtures thereof.

7. A composition according to any of the preceding claims wherein the pH is from 0.1 to 3, preferably from 0.5 to 2.

8. The use of an aqueous composition according to any of the preceding claims to remove limescale from a surface and, whereby the shine to the surface is improved.

9. A process of treating hard-surfaces, wherein a composition according to any of the preceding claims 1 to 7 is dispensed in its neat form from a container or applied diluted onto said surfaces, then left to act onto said surfaces and then removed by rinsing, whereby the shine to the surface is improved.

## Patentansprüche

1. Wäßrige Zusammensetzung mit einem pH von 0,1 bis 4,5, welche zur Entfernung von Kalksteinablagerungen auf harten Oberflächen geeignet ist, umfassend 0,1 bis 45% Maleinsäure, 0,01 bis 30 Gew.-% der gesamten Zusammensetzung eines Tensids, gewählt aus der Gruppe der anionischen, nichtionischen, amphoteren, zwitterionischen, kationischen Tenside oder Mischungen hiervon, und 10 bis 95% Wasser, dadurch gekennzeichnet, daß die Zusammensetzung weiterhin 0,1 bis 40% einer zweiten Säure umfaßt, gewählt aus der Gruppe Citronensäure, Bernsteinsäure oder Mischungen hiervon, wobei, wenn die zweite Säure Citronensäure ist, das Tensid kein nichtionisches Tensid oder Mischungen hiervon ist.

2. Zusammensetzung nach Anspruch 1, umfassend 0,1 bis 45 Gew. -% der gesamten Zusammensetzung an Maleinsäure, vorzugsweise 1 bis 25% und weiter vorzugsweise 8 bis 20%.

3. Zusammensetzung nach mindestens einem der vorangehenden Ansprüche, umfassend 0,1 bis 40 Gew.-% der gesamten Zusammensetzung an der zweiten Säure, vorzugsweise 1 bis 25% und weiter vorzugsweise 3 bis 10%.

4. Zusammensetzung nach mindestens einem der vorangehenden Ansprüche, wobei die zweite Säure Citronensäure ist.

5. Zusammensetzung nach mindestens einem der vorangehenden Ansprüche, wobei das Gewichtsverhältnis von Maleinsäure zu der zweiten Säure 1/10 bis 10/1, vorzugsweise 1/2 bis 8/1, am meisten bevorzugt 1/1 bis 6/1, beträgt.

6. Zusammensetzung nach mindestens einem der vorangehenden Ansprüche, wobei das Tensid ein kationisches Tensid der Formel R₁R₂R₃R₄N⁺ X⁻ ist, worin X ein Gegenion ist, R₁ eine C₈-C₂₀-Kohlenwasserstoffkette ist und R₂, R₃ und R₄ unabhängig voneinander aus H oder C₁-C₄-Kohlenwasserstoffketten oder Mischungen hiervon gewählt sind.

7. Zusammensetzung nach mindestens einem der vorangehenden Ansprüche, wobei der pH 0,1 bis 3, vorzugsweise 0,5 bis 2, beträgt.

8. Verwendung einer wäßrigen Zusammensetzung nach mindestens einem der vorangehenden Ansprüche zur Entfernung von Kalkablagerungen auf einer Oberfläche, wodurch der Glanz der Oberfläche verbessert wird.

9. Verfahren zum Behandeln von harten Oberflächen, wobei eine Zusammensetzung nach mindestens einem der vorangehenden Ansprüche 1-7 in unverdünnter Form von einem Behälter dispensiert oder verdünnt auf die Oberflächen aufgebracht wird, dann auf die Oberflächen einwirken gelassen und danach durch Spülen entfernt wird, wodurch der Glanz der Oberfläche verbessert wird.

## Revendications

1. Composition aqueuse présentant un pH compris entre 0,1 et 4,5, appropriée pour éliminer les dépôts de tartre sur des surfaces dures, comprenant 0,1 à 45 % d'acide maléique, 0,01 % à 30 % en poids de la composition totale d'un agent tensioactif sélectionné parmi le groupe composé d'agents tensioactifs anioniques, non ioniques, amphotères, zwitterioniques, cationiques, ou de mélanges de ceux-ci, et 10 % à 95 % d'eau, caractérisée en ce que ladite composition contient en outre 0,1 à 40 % d'un second acide sélectionné parmi le groupe composé de l'acide citrique, de l'acide succinique ou de mélanges de ceux-ci, et, si le second acide est de l'acide citrique, alors l'agent tensioactif n'est pas un agent tensioactif non ionique ou des mélanges de ceux-ci.

2. Composition selon la revendication 1, comprenant 0,1 % à 45 % en poids de la composition totale d'acide maléique, de préférence 1% à 25 %, et de façon plus préférentielle 8 à 20 %.

3. Composition selon l'une quelconque des revendications précédentes, comprenant 0,1 % à 40 % en poids de la composition totale dudit second acide, de préférence 1 % à 25 %, et de façon plus préférentielle 3 % à 10 %.

4. Composition selon l'une quelconque des revendications précédentes, dans laquelle ledit second acide est de l'acide citrique.

5. Composition selon l'une quelconque des revendications précédentes, dans laquelle le rapport pondéral de l'acide maléique au second acide est compris entre 1/10 et 10/1, de préférence entre 1/2 et 8/1, de façon la plus préférentielle entre 1/1 et 6/1.

6. Composition selon l'une quelconque des revendications précédentes, dans laquelle l'agent tensioactif est un agent tensioactif cationique correspondant à la formule R₁R₂R₃R₄N⁺ X⁻, dans laquelle X est un contre-anion, R₁ est une chaîne hydrocarburée en C₈ à C₂₀ et R₂, R₃ et R₄ sont indépendamment sélectionnés parmi H ou des chaînes hydrocarburées en C₁ à C₄, ou des mélanges de celles-ci.

7. Composition selon l'une quelconque des revendications précédentes, dans laquelle le pH est compris entre 0,1 et 3, de préférence entre 0,5 et 2.

8. Utilisation d'une composition aqueuse selon l'une quelconque des revendications précédentes pour éliminer le tartre d'une surface et au moyen de laquelle l'éclat de la surface est amélioré.

9. Procédé de traitement des surfaces dures, dans lequel une composition selon l'une quelconque des revendications 1 à 7 précédentes est distribuée sous sa forme non diluée depuis un conteneur ou appliquée diluée sur lesdites surfaces, puis mise à agir sur lesdites surfaces et éliminée par rinçage, suite à quoi l'éclat de la surface est amélioré.
